# EUROPEAN PATENT APPLICATION

(11) **EP 1 884 352 A2**
(43) Date of publication of application: **06.02.2008**
(21) Application number: 07253030.6
(22) Date of filing: 01.08.2007
(51) Int. Cl.: B32B 5/18, B32B 13/00, E04B 1/74

(54) **Building panel**

(30) Priority: 04.08.2006 GB 0615507; 20.09.2006 GB 0618470
(71) Applicant: Roxbury Limited, Gibraltar (GI)
(72) Inventor: Bullivant, Roger Alfred, Burton-on-Trent Staffordshire DE15 0SS (GB)
(74) Representative: Swindell & Pearson

(57) **Abstract**

A building panel 10 has first and second layers 12, 14 of settable material, and an insulating layer 16, between the first and second layers 12, 14. Thickened regions 26 of the settable material may provide reinforcement. Reinforcing members 28 may be incorporated.

## Description

Examples of the present invention provide building panels and methods for their production, particularly, but not exclusively, building panels suitable for use as external load-bearing wall panels for construction of buildings.

In a first aspect of the invention, there is provided a building panel having first and second layers of settable material, and an insulating layer between the first and second layers.

The settable material may be cementitious, such as concrete. The settable material may include a bonding material for enhanced bonding with the insulating layer. The settable material layers may each be at least 25 mm thick. The settable material of at least one layer may include reinforcing fibres or reinforcing rods.

The insulating layer may be a foamed material, which may be self-supporting and which may be polystyrene. The insulating layer may be at least 100 mm thick, or at least 200 mm thick.

The insulating layer may be provided, on at least one face, with recesses to receive bonding material for bonding with the first and/or second layer. The recesses may each have a relatively narrow mouth, and widen behind the mouth, to provide a mechanical engagement between the insulating layer and the bonding material. The bonding material may form a substantially continuous layer across the surface of the insulating layer and within the recesses.

At least one face of the insulating layer may have recesses to receive locally thickened regions of the corresponding first or second layer, the locally thickened regions providing reinforcement of the panel. The recesses may be elongate channels. The channels may extend across the panel to form reinforcing pillars or beams when the panel is in use. There may be channels extending in more than one direction across the panel. There may be channels extending in two generally perpendicular directions, to form generally vertical pillars and generally horizontal beams across the finished panel, during use. There may be reinforcing members set in the material of the first or second layer, within the elongate channels. The reinforcing members may be elongate reinforcing rods. The reinforcing members may be provided with connection means for connection with corresponding members of an adjacent panel, in use.

The panel may have at least one aperture for a door, window or the like. At least one outer face of the panel may be provided by the first or second layer and be pre-formed to a decorative appearance. The said outer face may be pre-formed to the appearance of brickwork or blockwork.

A heating and/or cooling element may be incorporated in the panel.

In another aspect of the invention, there is provided a method of forming a building panel, in which a first layer of settable material is set over a mould surface, a layer of insulating material is provided over the first layer, and a second layer of settable material is set over the layer of insulating material.

The settable material may be cementitious, such as concrete. The settable material may include a bonding material for enhanced bonding with the insulating layer. The settable material layers may each be at least 25 mm thick. The settable material of at least one layer may include reinforcing fibres, or reinforcing rods.

The insulating layer may be a foamed material, which may be self-supporting and which may be polystyrene. The insulating layer may be at least 100 mm thick, or at least 200 mm thick.

The insulating layer may be provided, on at least one face, with recesses to receive bonding material for bonding with the first and/or second layer. The recesses may each have a relatively narrow mouth, and widen behind the mouth, to provide a mechanical engagement between the insulating layer and the bonding material. The bonding material may form a substantially continuous layer across the surface of the insulating layer and within the recesses.

Recesses may be formed in the upper surface of the layer of insulating material, prior to setting the second layer, to form locally thickened regions of the second layer, the locally thickened regions providing reinforcement of the panel. The recesses may be elongate channels. The channels may extend across the panel to form reinforcing pillars or beams when the panel is in use. There may be channels extending in more than one direction across the panel. There may be channels extending in two generally perpendicular directions, to form generally vertical pillars and generally horizontal beams across the finished panel, during use. Reinforcing members may be set in the material of the first or second layer, within the elongate channels. The reinforcing members may be elongate reinforcing rods. The reinforcing members may be provided with connection means for connection with corresponding members of an adjacent panel, in use.

At least one outer face of the panel may be provided by the first or second layer and be pre-formed to a decorative appearance. The said outer face may be pre-formed to the appearance of brickwork or blockwork.

A heating and/or cooling element may be incorporated in the panel.

Examples of the present invention will now be described in more detail, by way of example only, and with reference to the accompanying drawings, in which:
Fig. 1 is a cross-section through a building panel which is an embodiment of the invention;
Figs. 2 to 4 are perspective views at respective stages of a method for forming a panel of Fig. 1;
Fig. 5 is a perspective view of the finished panel view from the outside, and
Fig 6 is a perspective view of a further alternative, viewed from the inside face.

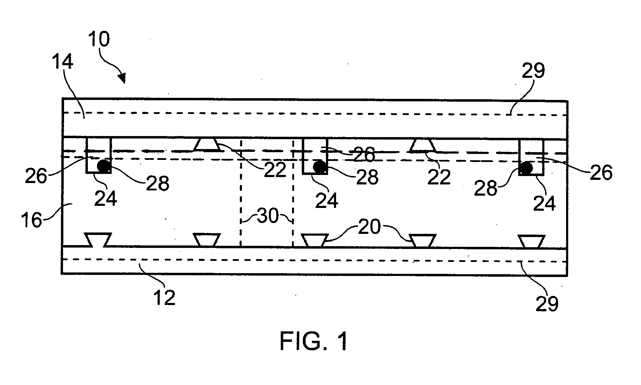

Fig. 1 shows a building panel 10 having first and second layers 12, 14 of settable material, and an insulating layer 16 between the first and second layers 12, 14.

The settable material of the layers 12, 14, in this example, is a settable concrete mix. The first layer 12 may also incorporate fibres or rods for reinforcement. These may be glass, steel, polypropylene or other reinforcement material. Reinforcing rods may be in the form of meshes or cages. The first layer 12 forms a decorative surface suitable for use as an exterior surface when the finished panel is used for construction, as will be described. The second layer 14 may be a more dense concrete mix. In this example, the first layer 12 may have a thickness of about 25 mm, with the second layer 14 having a thickness of about 75 mm. Either or both of the layers 12, 14 may incorporate bonding material of the type discussed below.

The insulating layer is a self-supporting sheet of foamed material, which is polystyrene in this example. In this example, the layer 16 has a thickness of at least 100 mm and may be 200 mm. Consequently, the total thickness of the panel 10 may be about 300 mm.

The layer 16 is provided with recesses 20 on the surface facing the layer 12. The recesses 20 are preferably channels cut into the surface of the polystyrene layer 16, for example by a hot wire process, but can alternatively be local concavities. The recesses 20 have a fan-tail shape to provide a relatively narrow mouth and to widen behind the mouth, as can be seen from Fig. 1. The recesses 20 receive adhesive material during the manufacturing process, to improve bonding between the layers 12, 16. In particular, the widening form provides mechanical engagement between the insulating layer and the bonding material. Additional recesses 22 may be provided in the layer 16, to receive bonding material for bonding between the layers 16, 14, and providing mechanical engagement in like manner.

The face of the layer 16, which faces the layer 14, has recesses 24 to receive locally thickened regions 26 of the layer 14. The thickened regions 26 provide reinforcement of the panel 10, in a manner which will become apparent from the following description. The recesses 24 are elongate channels which extend across the panel, allowing the thickened regions 26 to extend across the panel 10, so that they form pillars or beams when the panel is in use, as will be described, depending on the orientation of the thickened regions 26. Recesses 24 are preferably provided in two perpendicular directions, so that the panel, in use, is strengthened by generally vertical columns and by generally horizontal beams.

Reinforcing members 28, in the form of steel reinforcing bars or similar elongate reinforcing members, are provided in the recesses 24, set in the material of the thickened regions 26. These members 28 may have connectors at their ends, such as described in our patent GB 2371826, allowing adjacent panels to be fixed together.

Additional reinforcement may be provided within the layers 12, 14, in the form of reinforcing mesh 29.

In this example, the panel 10 has at least one aperture 30, indicated by broken lines in Fig. 1, for receiving a door, window or the like, when the panel 10 is in use.

One outer face of the panel 10 is provided by the outer face of the first layer 12 and is pre-formed to a decorative appearance. In this example, the appearance is of traditional brickwork, blockwork or the like. This makes the first layer 12 particularly appropriate for use as an external face of a building wall.

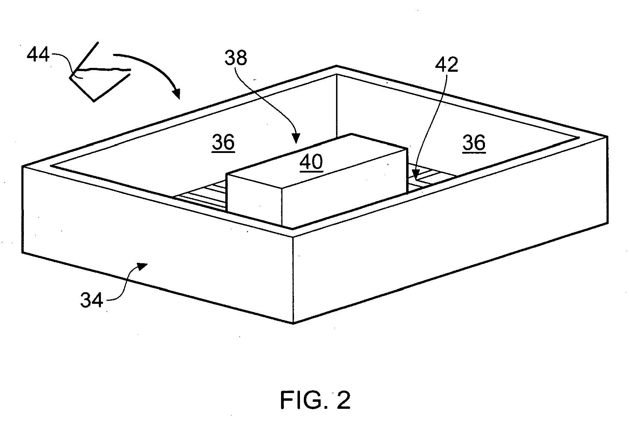

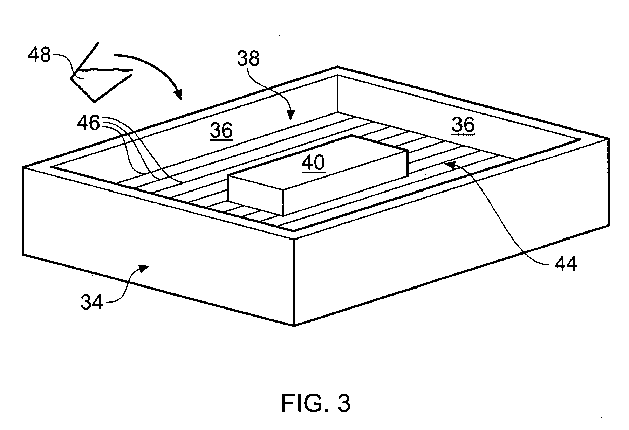

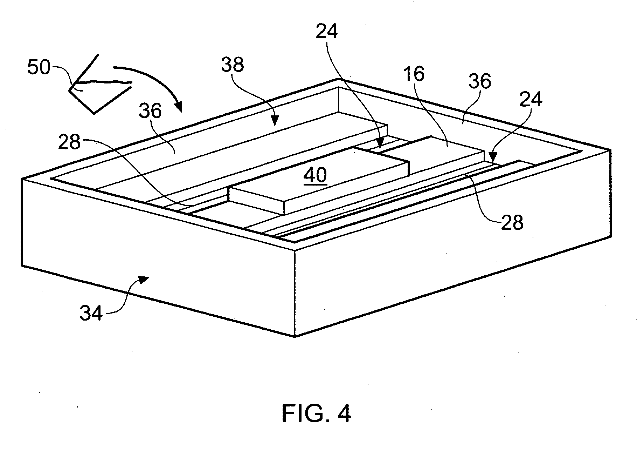

Figs. 2 to 4 illustrate the manner in which the panel described above can be made.

In Fig. 2, a mould 34 is provided in the form of a horizontal tray having walls 36 defining a mould cavity 38. If required, a plug 40 defines an aperture 30 in the final panel. The plug 40 is an upstand from the floor 42 of the tray 34. The floor 42 has a form which is complementary to the desired decorative appearance of the outer face of the first layer 12, for example traditional brickwork, blockwork or the like.

After preparing the walls 36 and floor 42 by appropriate release agents, if necessary, and placing mesh 29 in the cavity, the process begins by pouring unset material 44 onto the tray 34 to form the first layer 12. The material 44 flows across the floor 42, around the plug 40. The mould 34 may be placed on a vibrating table to assist flow. The material 44 commences drying.

The layer 16 is next placed in the mould. The layer 16 has been pre-prepared by cutting to size, cutting any apertures 30 required in the finished panel, forming locking recesses 20, 22 and forming reinforcing recesses 24. The cutting operations may be performed, for example, by a hot wire cutting technique. The layer 16 may be a single sheet over the entire area of the panel being formed, or may be several sheets assembled to cover the area.

Prior to placing the layer 16 in the mould 34, the surface which will be adjacent the first layer 12 is painted with a mix of cement and bonding material, such as a styrene-butadiene co-polymer latex, commonly known as SBR and available from Degussa Construction Chemicals (UK) of Manchester, United Kingdom, under the name FEBOND SBR. It is this material which may also be incorporated in the layers 12, 14, to further assist bonding.

The mix of cement and bonding material is used to fill the recesses 20 and also to paint across the surface of the insulating layer 16, between adjacent recesses. It may be desirable to apply two coats to the insulating layer 16, a first coat having a relatively high content of bonding agent, followed by a second layer of relatively low bonding agent content.

The layer 16 is then placed in the mould, so that the bonding agent/cement mix comes into contact with the upper surface of the first layer 12, preferably prior to the setting of the first layer 12 or the bonding agent/cement mix. These materials thereafter continue to set together, thereby forming a bond between the first layer 12 and the insulating layer 16, which is a combination of adhesion between the abutting faces of the layers 12, 16, and a mechanical bond formed by the body of bonding material/cement mix in the recesses 20. Prior to setting, the bonding material/cement mix within the recesses 20 also provides a form of reservoir from which material can flow between the opposed surfaces of the layers 12, 16, particularly if irregularities in either surface result in cavities between the layers. Downward force may be applied to the layer 16, during this stage, to assist in forming an intimate bond between the layers 12, 16. Vibration may also be applied to assist in expelling trapped air.

The screed 44 and adhesive 48 continue to set, thereby bonding the insulating layer 16 to the first layer 12.

After the introduction of the layer 16, reinforcing bars 28 are placed in the channels 24, initially held in position by spacers or other arrangements. The mesh 29 for the second layer 14 is similarly positioned in the mould 34.

Further material 50 is then poured into the mould 34, over the layer 16 and into the channels 24, resulting in the formation of the second layer 14 and the thickened regions 26 in the channels 24. The material 50 flows around the reinforcing bars 28 and mesh 29. The material 50 will also enter the recesses 22, providing mechanical engagement between the layers 14, 16, in similar manner to that described above. Vibration may be used at this stage, to assist flow.

The weight of the material 50 provides further downward force on the layer 16, pressing it against the layer 12.

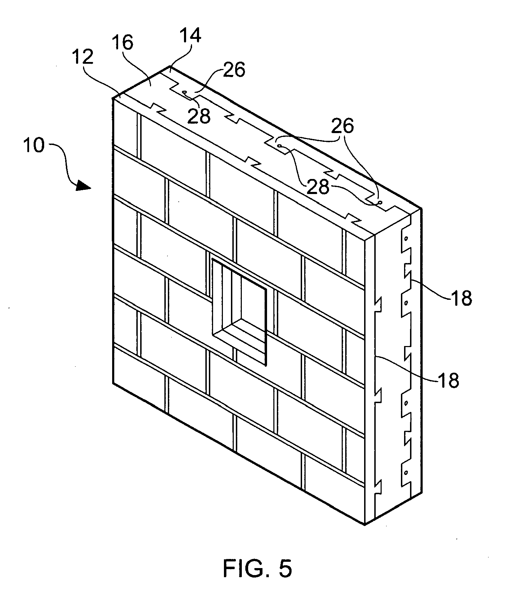

After the materials have been fully set, the panel 10 can be released from the mould 34. For example, the panel may be lifted by suction pads or other suitable lifting arrangements. The resulting panel 10 is illustrated in Fig. 5. The significance of various features which have been described above is apparent from consideration of Fig. 5. The outer surface of the first layer 12 provides the outer appearance of conventional brickwork or blockwork and it is expected that this can provide a good facsimile because the first layer 12 is formed first in the mould, on a horizontal floor 42, so that a fine grade, flowable mixture can be used to reproduce the form of the floor 42. Colouring material can be incorporated in the first layer 12, to further enhance the aesthetic appearance of the outer face. The outer face of the first layer 12 forms the exterior face of the panel 10, when used as a wall panel in building construction. This provides the building with the outward appearance of conventional construction.

The second layer 14 provides the inner face of the panel 10, when used in building construction. By using a sufficiently fine grade mix 50, or appropriate finishing while in the mould, the exposed face of the second layer 14 may be sufficiently smooth to allow for painting or other decoration with substantially no other surface preparation being required.

It can be seen from Fig. 5 that the thickened regions 26 of the second layer 14 are oriented, in use, to extend vertically and horizontally across the panel 10, thus forming pillars and beams in the panel 10, for reinforcing the panel 10 and bearing loads. Accordingly, the second layer 14 can be designed to provide the principal load-bearing skin of the panel 10. In particular, the thickness of the layer 14, and the number, size and spacing of the pillars and beams 26 can be chosen according to the design load to be borne.

The layer 16 is located within the panel 10 to provide insulation. A window (not shown) can readily be installed in the aperture 30, once the panel 10 is in its final position. Alternative shapes for the aperture 30 allow windows, doors or other closures of various sizes to be installed.

In an example, the panel may have side length of about 3000 mm by 6000 mm and a total thickness in the region of 300 mm.

It can be understood from the above that the example panel described has the outward appearance of conventional construction but has superior thermal properties by virtue of the layer 16, and is strong for load bearing, by virtue of the thickened regions 26. The panel 10 is pre-formed, which may include decoration and installation of windows and doors, so that construction time on site is reduced over conventional techniques. The structure of the panel 10 allows the panel to be structural, i.e. load-bearing, and external.

The use of a mid-layer of a material such as polystyrene may allow service ducts to be formed through the panel.

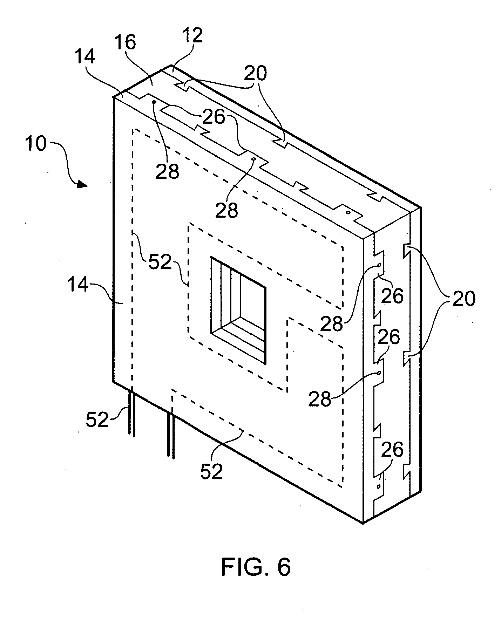

A further example is illustrated in Fig. 6. The example of Fig. 6 differs from the example of Fig. 5 only in that a heating or cooling arrangement 52 is incorporated in the second layer 14. The arrangement 52 may be, for example, a heating element such as a pipe for conducting heating fluid. Alternatively, or in addition, the arrangement 52 may be used to convey a cooled fluid, such as a refrigerant. The arrangement 52 is laid into the mould 34, prior to the second layer 14 being cast, to be cast into the layer 14. The arrangement 52 preferably extends around the layer 14 in serpentine manner, as indicated in Fig. 6. This arrangement allows effective heating and/or cooling of the interior of the building.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A building panel including first and second layers of settable material, and an insulating layer between the first and second layers.

2. A building panel as claimed in claim 1, wherein the settable material is cementitious.

3. A building panel as claimed in claim 2, wherein the settable material is concrete.

4. A building panel as claimed in any of the preceding claims, wherein the settable material includes a bonding material for enhanced bonding with the insulating layer.

5. A building panel as claimed in any of the preceding claims, wherein the settable material layers are each at least 25 mm thick.

6. A building panel as claimed in any of the preceding claims, wherein the settable material of at least one layer includes reinforcing fibres or reinforcing rods.

7. A building panel as claimed in any of the preceding claims, wherein the insulating layer is a foamed material.

8. A building panel as claimed in claim 7, wherein the insulating layer is self-supporting.

9. A building panel as claimed in claim 7 or 8, wherein the insulating layer is polystyrene.

10. A building panel as claimed in any of the preceding claims, wherein the insulating layer is at least 100 mm thick or at least 200 mm thick.

11. A building panel as claimed in any of the preceding claims, wherein the insulating layer is provided, on at least one face, with recesses to receive bonding material for bonding with a corresponding one of the first and the second layers.

12. A building panel as claimed in claim 11, wherein the recesses each have a relatively narrow mouth, and widen behind the mouth, to provide a mechanical engagement between the insulating layer and the bonding material.

13. A building panel as claimed in claim 11 or 12, wherein the bonding material forms a substantially continuous layer across the surface of the insulating layer and within the recesses.

14. A building panel as claimed in any preceding claim, wherein at least one face of the insulating layer has recesses to receive locally thickened regions of the corresponding first or second layer, the locally thickened regions providing reinforcement of the panel.

15. A building panel as claimed in any of claims 11 to 14, wherein the recesses are elongate channels.

16. A building panel as claimed in claim 15, wherein the channels extend across the panel to form reinforcing pillars or beams when the panel is in use.

17. A building panel as claimed in claim 15 or 16, wherein there are channels extending in more than one direction across the panel.

18. A building panel as claimed in claim 15, 16 or 17, wherein there are channels extending in two generally perpendicular directions, to form generally vertical pillars and generally horizontal beams across the finished panel, during use.

19. A building panel as claimed in any of claims 15 to 18, wherein there are reinforcing members set in the material of the first or second layer, within the elongate channels.

20. A building panel as claimed in claim 19, wherein the reinforcing members are elongate reinforcing rods.

21. A building panel as claimed in claim 19 or 20, wherein the reinforcing members are provided with connection means for connection with corresponding members of an adjacent panel, in use.

22. A building panel as claimed in any of the preceding claims, wherein the panel has at least one aperture for a door, window or the like.

23. A building panel as claimed in any of the preceding claims, wherein at least one outer face of the panel is provided by the first or second layer and is pre-formed to a decorative appearance.

24. A building panel as claimed in claim 23, wherein the said outer face is pre-formed to the appearance of brickwork or blockwork.

25. A building panel as claimed in any of the preceding claims, wherein a heating element is incorporated in the panel.

26. A building panel as claimed in any of the preceding claims, wherein a cooling element is incorporated in the panel.

27. A method of forming a building panel, in which a first layer of settable material is set over a mould surface, a layer of insulating material is provided over the first layer, and a second layer of settable material is set over the layer of insulating material.

28. A method as claimed in claim 27, wherein the settable material is cementitious.

29. A method as claimed in claim 28, wherein the settable material is concrete.

30. A method as claimed in any of claims 27 to 29, wherein the settable material includes a bonding material for enhanced bonding with the insulating layer.

31. A method as claimed in any of claims 27 to 30, wherein the settable material layers are each at least 25 mm thick.

32. A method as claimed in any of claims 27 to 31, wherein the settable material of at least one layer includes reinforcing fibres, or reinforcing rods.

33. A method as claimed in any of claims 27 to 32, wherein the insulating layer is a foamed material.

34. A method as claimed in claim 33, wherein the insulating later is self-supporting.

35. A method as claimed in claim 33 or 34, wherein the insulating layer is polystyrene.

36. A method as claimed in any of claims 27 to 35, wherein the insulating layer is at least 100 mm thick, or at least 200 mm thick.

37. A method as claimed in any of claims 27 to 36, wherein the insulating layer is provided, on at least one face, with recesses to receive bonding material for bonding with a corresponding one of the first and second layers.

38. A method as claimed in claim 37, wherein the recesses each have a relatively narrow mouth, and widen behind the mouth, to provide a mechanical engagement between the insulating layer and the bonding material.

39. A method as claimed in claim 37 or 38, wherein the bonding material forms a substantially continuous layer across the surface of the insulating layer and within the recesses.

40. A method as claimed in any of claims 37 to 39, wherein recesses are formed in the upper surface of the layer of insulating material, prior to setting the second layer, to form locally thickened regions of the second layer, the locally thickened regions providing reinforcement of the panel.

41. A method as claimed in any of claims 37 to 40, wherein the recesses are elongate channels.

42. A method as claimed in claim 41, wherein the channels extend across the panel to form reinforcing pillars or beams when the panel is in use.

43. A method as claimed in claim 41 or 42, wherein there are channels extending in more than one direction across the panel.

44. A method as claimed in 41 to 43, wherein there are channels extending in two generally perpendicular directions, to form generally vertical pillars and generally horizontal beams across the finished panel, during use.

45. A method as claimed in any of claims 41 to 44, wherein reinforcing members are set in the material of the first or second layer, within the elongate channels.

46. A method as claimed in claim 45, wherein the reinforcing members are elongate reinforcing rods.

47. A method as claimed in claim 45 or 46, wherein the reinforcing members are provided with connection means for connection with corresponding members of an adjacent panel, in use.

48. A method as claimed in any of claims 27 to 47, wherein at least one outer face of the panel is provided by the first or second layer and is pre-formed to a decorative appearance.

49. A method as claimed in claim 48, wherein the said outer face is pre-formed to the appearance of brickwork or blockwork.

50. A method as claimed in any of claims 27 to 49, wherein a heating element is incorporated in the panel.

51. A method as claimed in any of claims 27 to 50, wherein a cooling element is incorporated in the panel.

52. A building panel, substantially as described above, with reference to the accompanying drawings.

53. A method of forming a building panel, substantially as described above, with reference to the accompanying drawings.

54. Any novel subject matter or combination including novel subject matter disclosed herein, whether or not within the scope of or relating to the same invention as any of the preceding claims.
